(19) Europäisches Patentamt
European Patent Office
Office européen des brevets

(11) **EP 3 092 971 B1**

(12) **EUROPÄISCHE PATENTSCHRIFT**

(45) Veröffentlichungstag und Bekanntmachung des Hinweises auf die Patenterteilung:
**25.03.2020   Patentblatt 2020/13**

(51) Int Cl.:
*A61C 3/06* *(2006.01)*     *A61C 3/00* *(2006.01)*

(21) Anmeldenummer: **16169943.4**

(22) Anmeldetag: **17.05.2016**

(54) **MEDIZINISCHE HANDSCHLEIFVORRICHTUNG ZUM BEARBEITEN VON ZAHNOBERFLÄCHEN UND SET MIT SCHLEIFVORRICHTUNGEN**

MEDICAL MANUAL GRINDING TOOL FOR MACHINING THE SURFACES OF TEETH AND SET WITH GRINDING DEVICES

APPAREIL DE PONÇAGE MEDICAL MANUEL DESTINE A TRAITER LA SURFACE DES DENTS ET KIT COMPRENANT DES APPAREILS DE PONÇAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2015   DE 102015107679**

(43) Veröffentlichungstag der Anmeldung:
**16.11.2016   Patentblatt 2016/46**

(73) Patentinhaber: **Work for Smile GmbH**
**85435 Erding (DE)**

(72) Erfinder: **Widu, Friedrich**
**85435 Erding (DE)**

(74) Vertreter: **Bobbert & Partner**
**Patentanwälte PartmbB**
**Postfach 1252**
**85422 Erding (DE)**

(56) Entgegenhaltungen:
**EP-A1- 0 074 331        WO-A1-83/00824**
**KR-U- 20090 007 922    US-A1- 2006 057 540**
**US-A1- 2009 253 096    US-A1- 2014 220 507**

**Beschreibung**

Die Erfindung betrifft eine medizinische Handschleifvorrichtung gemäß dem Oberbegriff des Anspruchs 1 sowie ein Set mit Schleifvorrichtungen gemäß dem Oberbegriff des Anspruchs 12.

Zur Behandlung von Zahnfehlstellungen sind aus der Praxis verschiedene kieferorthopädische Verfahren und Vorrichtungen bekannt. Zahnfehlstellungen werden oft durch sogenannte orthodontische (zahnregulierende) Zahnbewegungen korrigiert. Zahnbewegungen können beispielsweise mittels herausnehmbarer oder festsitzender Apparaturen (Zahnspangen) erfolgen. Herausnehmbare Zahnspangen können plattenförmig ausgestaltet sein oder die Form von Korrekturschienen (sogenannte Aligner) aus transparentem Kunststoff aufweisen. Alternativ oder ergänzend zu den Zahnspangen können Zahnbewegungen durch das Erzeugen von Zahnzwischenräumen zwischen Zähnen, die Fehlstellungen aufweisen, initiiert oder begünstigt werden. Mittels erzeugter Zahnzwischenräume (Spalte zwischen benachbarten Zähnen) können sich Zähne auf gewünschte Weise ausrichten und somit Zahnfehlstellungen korrigiert oder eine Korrektur begünstigt werden.

Zum Beispiel offenbart US 2014/220507 ein medizinisches Schleifband zum zahnschmelzabtragenden Bearbeiten von Zahnoberflächen durch Einführen des Schleifbands zwischen benachbarten Zähnen eines Patienten.

Zahnzwischenräume können durch Schleifmittel erzeugt oder vergrößert werden. Beispielsweise kann ein Zahnarzt Schleifscheiben definierter Dicke einsetzen, um die Zahnzwischenräume zu erzeugen.

Aufgabe der vorliegenden Erfindung ist es, eine weitere Vorrichtung zum Erzeugen von Zahnzwischenräumen bereitzustellen.

Die Aufgabe kann durch eine medizinische Handschleifvorrichtung mit den Merkmalen des Anspruchs 1 und durch ein Set mit den Merkmalen des Anspruchs 12 gelöst werden.

Erfindungsgemäß wird somit eine medizinische Handschleifvorrichtung (kurz: Schleifvorrichtung) zum zahnschmelzabtragenden Bearbeiten von Zahnoberflächen vorgeschlagen. Die Schleifvorrichtung ist zum Bearbeiten von Zahnoberflächen zwischen benachbarte Zähne eines Patienten einführbar. Die Schleifvorrichtung weist wenigstens einen ersten Bereich auf. Der erste Bereich kann einer Verletzung des Zahnfleischs bei der gebrauchsgemäßen Verwendung der Schleifvorrichtung entgegenwirken. Weiterhin weist die Schleifvorrichtung wenigstens einen zweiten Bereich mit einer vorgegebenen Dicke zum Erzeugen eines Spalts zwischen den benachbarten Zähnen auf.

Erfindungsgemäß weist der zweite Bereich eine Sollbruchstelle auf. Der zweite Bereich bricht an dieser Sollbruchstelle bei Überschreiten eines kritischen Biegemoments $M_{krit}$ um eine Achse senkrecht zu seiner Längsachse und senkrecht zu seiner Dicke.

In einigen Ausführungsformen weist zusätzlich der zweite Bereich eine Biegesteifigkeit E*I um eine Achse senkrecht zur Längsachse des zweiten Bereichs und senkrecht zur Dicke des zweiten Bereichs von wenigstens $0{,}01*10^{-3}$ $N*m^2$ und höchstens $15*10^{-3}$ $N*m^2$, insbesondere zwischen $0{,}1*10^{-3}$ $N*m^2$ und $10*10^{-3}$ $N*m^2$, und weiter insbesondere zwischen $1*10^{-3}$ $N*m^2$ und $5*10^{-3}$ $N*m^2$ auf.

In einigen Ausführungsformen weist der zweite Bereich ein Grundmaterial mit einer Bruchzähigkeit $K_{Ic}$ von kleiner als $50$ $MPa*m^{1/2}$, insbesondere kleiner als $30$ $MPa*m^{1/2}$, weiter insbesondere kleiner als $20$ $MPa*m^{1/2}$, und weiter insbesondere kleiner als $10$ $MPa*m^{1/2}$ auf.

Das Grundmaterial kann als Strukturmaterial oder Basismaterial der Schleifvorrichtung bezeichnet werden.

Das erfindungsgemäße Set weist wenigstens zwei erfindungsgemäße Schleifvorrichtungen auf, von welchen sich wenigstens zwei Schleifvorrichtungen in ihren Dicken unterscheiden. Die unterschiedlichen Dicken können zum Einführen in unterschiedliche breite Spalte benachbarter Zähne dienen. Sie können vorgesehen sein, nacheinander und in Abhängigkeit von einer Zunahme des bearbeiteten Spalts zum Einsatz zu kommen.

Erfindungsgemäße Ausführungsformen können eines oder mehrere der vorstehend oder im Folgenden genannten Merkmale in beliebiger Kombination aufweisen. Erfindungsgemäße Ausführungsformen sind ferner Gegenstand der Unteransprüche.

Bei allen hierin gemachten Ausführungen ist der Gebrauch des Ausdrucks "kann sein" bzw. "kann haben" usw. synonym zu "ist vorzugsweise" bzw. "hat vorzugsweise" usw. zu verstehen und soll eine erfindungsgemäße Ausführungsform erläutern.

Wann immer hierin Zahlenworte genannt werden, so versteht der Fachmann diese als Angabe einer zahlenmäßig unteren Grenze. Sofern dies zu keinem für den Fachmann erkennbaren Widerspruch führt, liest der Fachmann daher beispielsweise bei der Angabe "ein" oder "einem" stets "wenigstens ein" oder "wenigstens einem" mit. Dieses Verständnis ist ebenso von der vorliegenden Erfindung umfasst wie die Auslegung, dass ein Zahlenwort wie beispielsweise "ein" alternativ als "genau ein" verstanden werden kann, wo immer dies für den Fachmann erkennbar technisch möglich ist. Beides ist von der vorliegenden Erfindung umfasst und gilt für alle hierin verwendeten Zahlenworte.

Die Biegesteifigkeit kann als die Fähigkeit eines auf Biegung beanspruchten Bauteils verstanden werden, der Verbiegung des Bauteils einen Widerstand entgegenzusetzen. Das Bauteil kann nach einer Verbiegung und ohne eine Beanspruchung, oder einer Zurücknahme der Beanspruchung, wieder elastisch in den Ausgangszustand zurückkehren. Die Biegesteifigkeit kann als Maß für den Widerstand gegen eine derartige Formänderung verstanden werden. Die Biegesteifigkeit eines Bauteils, beispielsweise eines Stabes, kann sowohl mit seinem axialen Trägheitsmoment I als auch mit seinem Elastizitätsmodul E (des Bauteilwerkstoffs) ansteigen. Die Biegesteifigkeit kann als das Produkt aus dem Elastizitätsmodul E und dem Trägheitsmoment I definiert werden.

Die Biegesteifigkeit kann ein Maß für das Verhältnis eines ausgeübten Biegemoments auf ein Bauteils zu seiner Krümmung, infolge oder als Reaktion des Biegemoments, sein. Insbesondere für homogene Bauteil-Querschnitte kann die Biegesteifigkeit als das Produkt aus dem Elastizitätsmodul E des Bauteilmaterials und seinem geometrischen Flächenträgheitsmoment eines Bauteil-Querschnitts ermittelt werden.

In bestimmten erfindungsgemäßen Ausführungsformen ist die Schleifvorrichtung stabförmig ausgebildet und der Querschnitt rechteckig. Die Schleifvorrichtung wird insbesondere an einem oder an beiden Enden fixiert, beispielsweise durch eine Einspannung in ein Handinstrument oder durch eine manuelle Fixierung oder Halten mit zwei Händen. Das geometrische Flächenträgheitsmoment kann somit als ein axiales Flächenträgheitsmoment betrachtet werden, wobei die Achsrichtung als z-Achse bezeichnet wird, die senkrecht zur Längsachse, im Folgenden als x-Achse bezeichnet, und senkrecht zur Breite (die Achse in Richtung der Breite wird als y-Achse bezeichnet) der Schleifvorrichtung ausgerichtet ist.

Rein exemplarisch kann die Biegesteifigkeit eines Bauteils wie folgt errechnet werden:

$$\text{Elastizitätsmodul E (Materialkennwert des Bauteils)} = 180 \ \frac{kN}{mm^2}$$

Axiales Flächenträgheitsmoment $I_z = \dfrac{h * b^3}{12}$; mit h = Höhe, b = Breite, Dicke h = 10 mm, b = 0,4 mm

Daraus errechnet sich ein Wert einer Biegesteifigkeit $E * I_z$ von $9,6*10^{-3}$ N*m$^2$.

Erfindungsgemäß bricht der zweite Bereich an der Sollbruchstelle bei Überschreiten eines kritischen Biegemoments $M_{krit}$ um eine Achse senkrecht zu seiner Längsachse und senkrecht zu seiner Dicke. Die Sollbruchstelle kann eine Stelle oder ein Abschnitt des zweiten Bereichs sein, an dem eine, insbesondere elastische Biegung bei einem anliegenden Biegemoment des zweiten Bereichs erfolgt. Diese Biegung kann sich elastisch wieder Zurückbilden, wenn das Moment nicht mehr anliegt. Daher kann es sein, dass die Sollbruchstelle nicht immer zu einem Bruch bei einem anliegenden Biegemoment führt. Vielmehr kann die Sollbruchstelle geeignet sein, eine elastische Biegung an anderen Abschnitten des zweiten Bereichs zu vermeiden. Die Bruchzähigkeit kann als Risszähigkeit bezeichnet werden.

Die Bruchzähigkeit kann in der Bruchmechanik den Widerstand eines Materials gegen einen, insbesondere instabilen, Rissfortschritt beschreiben. Jedem Material kann als Werkstoffkennwert (oder Materialkennwert) eine Bruchzähigkeit zugeordnet werden, der den sogenannten kritischen Spannungsintensitätsfaktor $K_{Ic}$ beschreibt, bei dem ein instabiler Rissfortschritt einsetzen kann.

In bestimmten erfindungsgemäßen, beispielhaften Ausführungsformen weist die erfindungsgemäße Schleifvorrichtung eine vorbestimmte Dicke zum Erzeugen eines Spalts zwischen benachbarten Zähnen auf.

Die Schleifvorrichtung weist in bestimmten erfindungsgemäßen, beispielhaften Ausführungsformen wenigstens eine Schleiffläche auf, welche zumindest abschnittsweise durch eine abtragbare Körnung beschichtet ist oder eine Körnung trägt.

In bestimmten erfindungsgemäßen, beispielhaften Ausführungsformen ist die Schleifvorrichtung zum manuellen Bearbeiten von Zahnoberflächen ausgeführt. Eine manuelle Bearbeitung mit einer Hand oder zwei Händen kann ein direktes Führen der Schleifvorrichtung umfassen. Ebenso kann die Schleifvorrichtung in ein Werkzeug oder in eine Halterung eingespannt sein, mit der die Schleifvorrichtung einfach und genau geführt werden kann. Beispielsweise kann das Werkzeug einen ergonomischen Handgriff aufweisen, um die Schleifvorrichtung mit einer Hand zu führen.

Die Zahnoberflächen sind insbesondere die Oberflächen des Zahnschmelzes.

In einigen erfindungsgemäßen, beispielhaften Ausführungsformen ist die abtragbare Körnung der Schleiffläche des zweiten Bereichs eine Beschichtung, die nur in dem Bereich abgetragen wird, die unmittelbar zur Bearbeitung oder zum Abschleifen der Zahnoberflächen genutzt wird. Beispielsweise kann die Körnung ausgestaltet und vorgesehen sein, um durch die Reibkraft oder den Anpreßdruck beim Bearbeiten der Zahnoberfläche abgetragen werden. Die Körnung kann beispielsweise in Form kleinster Partikel abgetragen werden oder abtragbar sein, z. B. im $\mu$m Bereich, oder in Form kleiner Partikel im mm Bereich.

Die Materialien des ersten und des zweiten Bereichs sind vorzugsweise insbesondere biokompatibel oder zumindest nicht toxisch, oder auf andere Weise unschädlich, für einen Patienten oder eine Person, die mit der Schleifvorrichtung behandelt wird bzw. mit dieser in Berührung kommt.

In manchen erfindungsgemäßen, beispielhaften Ausführungsformen ist das Material des ersten Bereichs ein Polymer oder weist ein Polymer auf. Der erste Bereich kann, als Zwischenschicht zwischen der Schleiffläche und dem Zahnfleisch, ein Schutz gegen Verletzungen des Zahnfleisches sein. Eine Berührung des Zahnfleisches mit der Schleiffläche kann mittels des ersten Bereichs vermieden werden. Der erste Bereich kann eine Polymerbeschichtung mit einer glatten Oberfläche aufweisen.

In bestimmten erfindungsgemäßen, beispielhaften Ausführungsformen ist das Material des ersten Bereichs Silikon oder weist Silikon auf.

In einigen erfindungsgemäßen, beispielhaften Ausführungsformen umfasst die vorgegebene Dicke des zweiten Bereichs das Grundmaterial und die Schleiffläche zum zahnschmelzabtragenden Bearbeiten der Zahnoberflächen. Die Körnung der Schleiffläche kann in einer Basismatrix oder Matrixstruktur eingebettet oder eingeschlossen sein. Die Basismatrix kann ein Polymer sein oder ein Polymer aufweisen.

Die Körnung weist in gewissen erfindungsgemäßen, beispielhaften Ausführungsformen eine höhere Materialhärte als der abzutragende Zahnschmelz zweier benachbarter Zähne auf. Die Körnung kann während eines Schleifvorgangs zur Spalterzeugung zwischen zwei Zähnen ganz oder teilweise abtragbar sein. Falls die Körnung in einer Matrixstruktur eingebettet ist, kann der Abtrag die Körnung und die Matrixstruktur umfassen.

In bestimmten erfindungsgemäßen, beispielhaften Ausführungsformen weist die Schleifvorrichtung Abschnitte zum manuellen Führen der Schleifvorrichtung auf.

In bestimmten erfindungsgemäßen, beispielhaften Ausführungsformen weisen die beiden Endbereiche des Streifens speziell zum Fixieren und manuellen Führen anstatt der abtragbaren Beschichtungen eine andersartige Beschichtung, beispielsweise eine reibarme Gummierung, oder Strukturierung, beispielsweise eine profilierte Oberfläche, auf.

In einigen erfindungsgemäßen, beispielhaften Ausführungsformen weist die Schleifvorrichtung wenigstens einen Abschnitt auf, mittels welchem sie in einem Instrument aufgenommen werden kann. Ein Instrument kann eine Haltevorrichtung für die Schleifvorrichtung mit einem Handgriff sein. Die Haltevorrichtung kann die Schleifvorrichtung beispielsweise mittels einer Klemmvorrichtung, eines Bajonettverschlusses oder einer anderen, insbesondere wieder lösbaren, Vorrichtung fixieren oder verbinden.

In manchen erfindungsgemäßen, beispielhaften Ausführungsformen beträgt die Dicke des zweiten Bereichs der Schleifvorrichtung wenigstens 0,1 mm und höchstens 0,6 mm. Beispielsweise kann in einem ersten Bearbeitungsschritt von benachbarten, einander angrenzenden Zähnen mittels einer ersten, vergleichsweise dünnen Schleifvorrichtung mit einer Dicke von 0,1 mm ein erster Spalt zwischen den Zähnen erzeugt werden, und anschließend mittels Schleifvorrichtungen von jeweils zunehmender Dicke ein größerer Spalt erzeugt werden. Wenn sich der Spalt in der Folgezeit infolge von Zahnbewegungen wieder verkleinern sollte, kann je nach aktueller Spaltbreite eine Schleifvorrichtung passender Dicke zu einer gewünschten Spaltvergrößerung verwendet werden.

In einigen erfindungsgemäßen, beispielhaften Ausführungsformen weist die Schleifvorrichtung eine Schleiffläche mit einer gekörnten Oberflächenstruktur zum Bearbeiten der Zahnoberfläche auf. Die gekörnte Oberflächenstruktur kann eine beschichtete Oberfläche sein. Beispielsweise können Körner bestimmter Korngrößen oder Korngrößenbereiche, insbesondere Korngrößen im Bereich zwischen 10 μm und 800 μm, verwendet werden. Die Körner können beispielsweise auf ein Grundmaterial der Schleifvorrichtung aufgeklebt sein.

In manchen erfindungsgemäßen, beispielhaften Ausführungsformen weist das Grundmaterial eine optische Markierung auf. Eine optische Markierung kann vorteilhaft dem Anwender anzeigen, dass beispielsweise die Körnung, mit oder ohne Matrixstruktur, ganz oder teilweise abgetragen ist. Die optische Markierung kann den Anwender darauf hinweisen, den Schleifvorgang zumindest in dem abgetragenen Bereich zu beenden. Eine optische Markierung kann eine Farbmarkierung sein.

In manchen erfindungsgemäßen, beispielhaften Ausführungsformen weist der zweite Bereich der Schleifvorrichtung eine Lochstruktur zum Bearbeiten der Zahnoberfläche auf. Die Lochstruktur kann scharfkantige Löcher aufweisen. Die Löcher können rund, oval, mehreckig oder von anderer Gestalt sein.

In bestimmten erfindungsgemäßen, beispielhaften Ausführungsformen ist die Schleifvorrichtung aus Metall hergestellt oder weist Metall auf. Insbesondere kann das Grundmaterial ein Metall sein, das beispielsweise zum Erzeugen der Schleiffläche strukturiert oder beschichtet ist.

Die benachbarten Zähne können aneinander angrenzende, sich berührende oder nicht berührende Zähne sein. Die Zähne können Schneidezähne, Eckzähne oder Backenzähne sein. Die Zähne können Milchzähne oder bleibende Zähne sein.

In bestimmten erfindungsgemäßen, beispielhaften Ausführungsformen weist die Schleifvorrichtung keinen Stromverbraucher auf.

In einigen erfindungsgemäßen, beispielhaften Ausführungsformen weist die Schleifvorrichtung eine Streifenform auf oder ist ein Streifen.

Der zweite Bereich der erfindungsgemäßen Schleifvorrichtung dient dem Schutz vor

Verletzungen des Zahnfleischs bei der bestimmungsgemäßen Anwendung der Schleifvorrichtung.

Das erfindungsgemäße Set mit Schleifvorrichtungen kann Schleifvorrichtungen mit gestuften Dicken, insbesondere mit Dicken von 0,1 mm, 0,2 mm, 0,3 mm, 0,4 mm, 0,5 mm und 0,6 mm zum Erzielen unterschiedlicher Spaltbreiten oder zum Einführen in unterschiedlich beabstandete, benachbarte Zähne aufweisen. Das Set kann ebenso Schleifvorrichtungen mit weiteren Unterteilungen, beispielsweise in 0,05 mm Schritten, aufweisen.

In bestimmten erfindungsgemäßen, beispielhaften Ausführungsformen weist das Set Schleifvorrichtungen in oder mit unterschiedlichen Farben auf, welche zur Markierung der jeweiligen Dicke der Schleifvorrichtung dienen. Rein exemplarisch kann beispielsweise "gelb" eine Dicke von 0,1 mm, "rot" eine Dicke von 0,3 mm oder "blau" eine Dicke von 0,5 mm bedeuten.

Mittels des Verfahrens zum Erzeugen eines Spalts zwischen benachbarten Zähnen kann zunächst ein kleiner Spalt mit einer Schleifvorrichtung mit einer vergleichsweise geringen Dicke erzeugt werden, anschließend können schrittweise größere Spalte mit aufsteigenden Dicken der Schleifvorrichtungen erzeugt werden. Einige oder alle erfindungsgemäßen Ausführungsformen können einen oder mehrere der oben oder im Folgenden genannten Vorteile aufweisen.

Ein erfindungsgemäßer Vorteil kann darin bestehen, dass die Schleifvorrichtung, insbesondere bei einer Anwendung durch nicht ausreichend geschultes Personal oder den Patienten selber, aufgrund des ersten Bereichs dazu beiträgt, das Risiko von Zahnfleischverletzungen beim Bearbeiten der Zähne zu senken. So kann es vorteilhaft möglich sein, dass der Patient selbst die Schleifvorrichtung ohne oder mit einem zumindest verringerten Verletzungsrisiko benutzen kann. Damit können vorteilhaft Zeit und Kosten eingespart werden, da die hierin beschriebene Bearbeitung der Zähne nicht unbedingt vom Zahnarzt oder medizinischem Personal erfolgen muss.

Die vorliegende Erfindung wird im Folgenden anhand der beigefügten Zeichnungen, in welcher identische Bezugszeichen gleiche oder ähnliche Bauteile bezeichnen, exemplarisch erläutert. In den zum Teil stark vereinfachten Figuren gilt:

Fig. 1    zeigt eine in ein Handinstrument eingespannte, erfindungsgemäße Schleifvorrichtung bei einer Anwendung zur Spalterzeugung zwischen zwei Schneidezähnen;

Fig. 2    zeigt die aus Fig. 1 in ein Handinstrument eingespannte, erfindungsgemäße Schleifvorrichtung bei einer Anwendung zur Spalterzeugung zwischen zwei Backenzähnen;

Fig. 3    zeigt eine mit zwei Händen gehaltene und geführte Schleifvorrichtung zur Spalterzeugung zwischen zwei Schneidezähnen;

Fig. 4    zeigt ein Sortiment verschiedener erfindungsgemäßer Schleifvorrichtungen zur Anwendung an Schneidezähnen;

Fig. 5a-b    zeigen erfindungsgemäße Schleifvorrichtungen im Querschnitt, und

Fig. 5c-d    zeigen eine weitere erfindungsgemäße Schleifvorrichtung in einer Seitenansicht und in einer Aufsicht von oben.

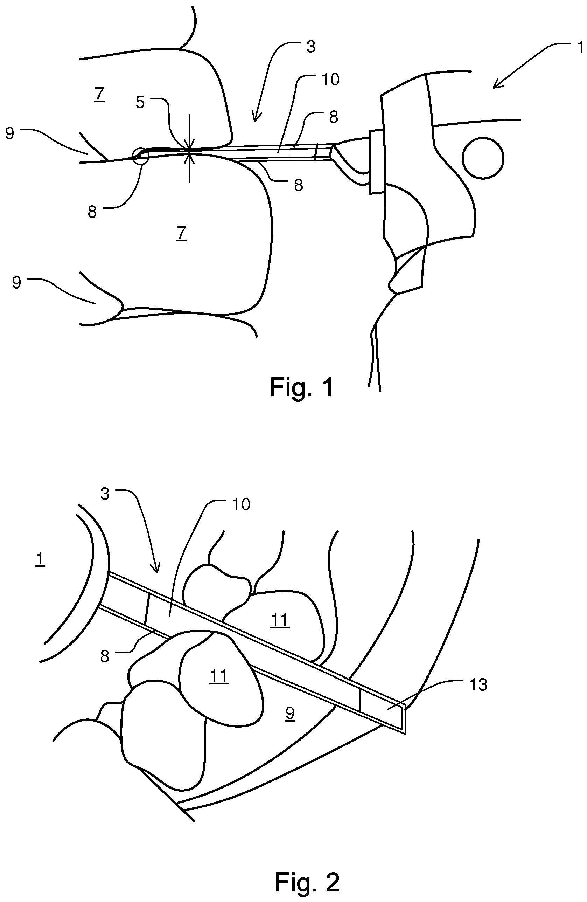

**Fig. 1** zeigt in einer perspektivischen Ansicht eine in ein Handinstrument 1 eingespannte, erfindungsgemäße Schleifvorrichtung 3 bei einer Anwendung zur Erzeugung eines Spalts 5 zwischen zwei Schneidezähnen 7.

Die Schleifvorrichtung 3 weist einen ersten Bereich 8 zum Schutz gegen Verletzungen des Zahnfleischs 9 und einen zweiten Bereich 10 zum Erzeugen des Spalts 5 auf.

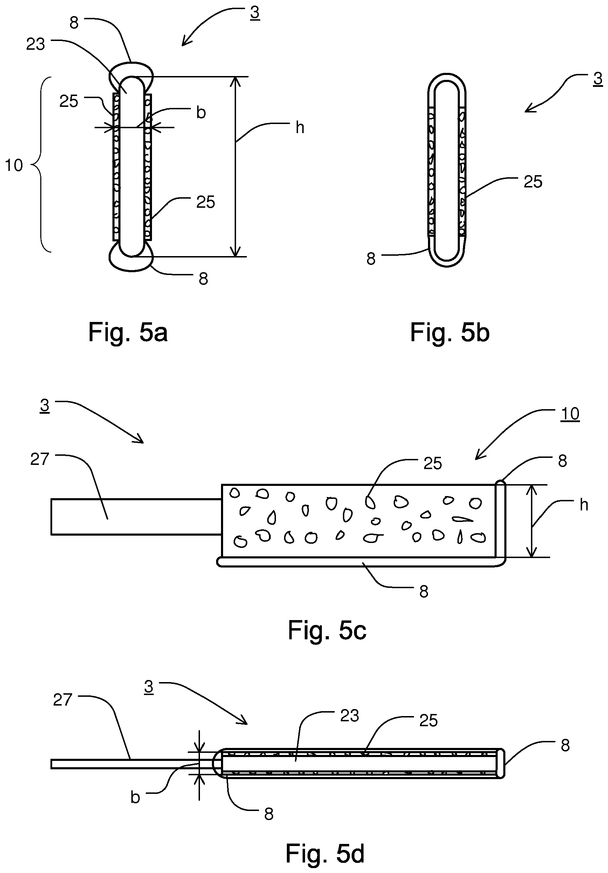

Der erste Bereich 8 umgibt den zweiten Bereich 10 in diesem Ausführungsbeispiel stirnseitig (in Fig. 1 am linken Ende, zwischen den Schneidezähnen 7) und seitlich (in Fig.1 oben und unten). Das Material des ersten Bereichs 8 kann ein weicher Kunststoff, insbesondere Silikon, sein und kann an den Rändern der Schleifvorrichtung beispielsweise mittels Beschichtung oder Klebung aufgebracht sein. Das Material kann dünn oder dick, z. B wulstförmig (siehe Fig. 5c und Fig. 5d), aufgebracht sein. Aufgrund seiner elastischen Verformbarkeit kann sich das Material des ersten Bereichs 8 an enge Spaltgeometrien zwischen den Schneidezähnen 7 anpassen.

Das Grundmaterial des zweiten Bereichs 10 weist eine Bruchzähigkeit $K_{Ic}$ von kleiner als

$$50 \text{ MPa} * \text{m}^{1/2} (= 50 * 10^6 \text{ Pa} * \sqrt{m}; \text{Pa} = \frac{N}{m^2} = \frac{kg}{m * s^2}) \text{ auf.}$$

Eine Bruchzähigkeit $K_{Ic}$ von kleiner als 50 MPa * m$^{1/2}$ kann eine hohe Steifigkeit aufweisen. Eine hohe Steifigkeit des Materials kann vorteilhaft dazu genutzt werden, einerseits eine genaue Spaltgeometrie zwischen den zu bearbeitenden Zähnen zu erreichen, und andererseits eine Verletzung des Zahnfleischs 9 zu vermeiden. Wird die Schleifvorrichtung 3 vom Anwender dennoch zu stark gebogen, bricht das Grundmaterial, insbesondere an einer Sollbruchstelle 12. Die Sollbruchstelle 12 ist vorzugsweise an einer Stelle der Schleifvorrichtung 3 angeordnet, die kein oder nur ein geringes Verletzungsrisiko infolge der Bruchkanten an der Sollbruchstelle 12 aufweist.

Das Grundmaterial des zweiten Bereichs 10 weist insbesondere eine Schleiffläche mit einer mechanisch abtragbaren Körnung auf. Die Körnung kann auf unterschiedliche Art und Weise auf das Grundmaterial aufgebracht sein, beispielsweise direkt geklebt oder indirekt mittels einer Matrix, in die die Körnung eingebettet ist.

Die Schleiffläche kann eine Beschichtung auf dem Grundmaterial des zweiten Bereichs sein.

Die Schleiffläche ist mechanisch abtragbar, etwa im bestimmungsgemäßen Gebrauch, und wird nur an solchen Stellen von der Oberfläche der Schleifvorrichtung 3 abgetragen, die in direktem Eingriff oder Kontakt mit den Schneidezähnen 7 stehen.

Die Schleifvorrichtung 3 ist beispielsweise mittels einer Klemmvorrichtung oder mittels eines Bajonettverschlusses in das Handinstrument 1 eingespannt.

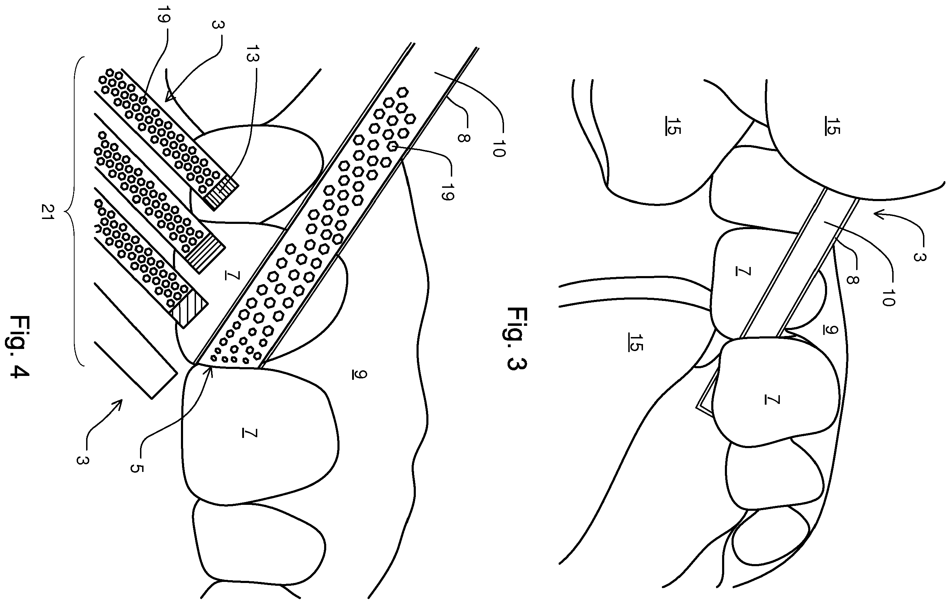

Fig. 2 zeigt die aus Fig. 1 bekannte, in ein Handinstrument 1 eingespannte, erfindungsgemäße Schleifvorrichtung 3 bei einer Anwendung zur Spalterzeugung zwischen zwei Backenzähnen 11. Im Gegensatz zur Bewegungsrichtung der Schleifvorrichtung 3 in Fig. 1 in Richtung auf das Zahnfleisch 9 zu ist die Bewegungsrichtung der Schleifvorrichtung 3 in Fig. 3 parallel zur Oberfläche der Backenzähne 11 und parallel zu dem zwischen den betroffenen Backenzähnen 11 gelegenen Zahnfleisch 9. Der Abstand zwischen Schleifvorrichtung 3 und Zahnfleisch 9 ändert sich bei dieser Bewegungsrichtung nicht oder nicht wesentlich.

Die erfindungsgemäße Schleifvorrichtung 3 weist, hier exemplarisch an der Spitze oder an einem vorderen Bereich der Schleifvorrichtung 3, eine Markierung 13 zur Unterscheidung der jeweiligen Dicke der Schleifvorrichtung 3 auf. Die Markierung kann eine Farbmarkierung sein.

Die Schleifvorrichtung 3 weist, analog zur Beschreibung der Fig. 1, einen ersten Bereich 8, einen zweiten Bereich 10 und insbesondere eine Beschichtung auf einem Grundmaterial des zweiten Bereichs 10 auf.

Fig. 3 zeigt eine mittels Fingern 15 zweier Hände gehaltene und geführte Schleifvorrichtung 3 beim Erzeugen eines Spalts zwischen zwei Schneidezähnen 7. Die Schleifvorrichtung 3 wird ohne weitere Hilfsmittel manuell mit den Händen geführt. Die Enden der Schleifvorrichtung 3 können Griffe oder beispielsweise gummierte Beschichtungen zum besseren Halten der Schleifvorrichtung 3 zwischen den Fingern 15 aufweisen.

Fig. 4 zeigt ein Set 21, oder Sortiment, verschiedener erfindungsgemäßer Schleifvorrichtungen 3 zur Anwendung an Schneidezähnen 7. Die gelochten Schleifvorrichtungen 3 weisen, vorzugsweise scharfkantige, Löcher 19 auf. Mithilfe der Löcher 19 kann die Oberfläche der Schneidezähne 7, der sogenannte Zahnschmelz, abgetragen werden, um einen Spalt 5 zwischen den Schneidezähnen 7 zu erzeugen.

In dem Ausführungsbeispiel der Fig. 4 weist das Grundmaterial des zweiten Bereichs 10 keine Beschichtung mit einer Körnung, weder mit noch ohne Matrix, auf. Vielmehr ist die Schleiffläche die gelochte Struktur des Grundmaterials.

Die Markierungen 13 weisen auf unterschiedliche Dicken der Schleifvorrichtungen 3 zur Erzeugung unterschiedlich breiter Spalte 5 hin.

Fig. 5a und 5b zeigen erfindungsgemäße Schleifvorrichtungen 3 verschiedener Ausführungsformen, jeweils im Querschnitt.

Fig. 5a zeigt die Schleifvorrichtung 3, welche aus einem streifenförmigen Grundmaterial 23 mit einer Schleiffläche 25, die zusammen den zweiten Bereich 10 bilden, sowie dem ersten Bereich 8, einem angegossenen oder angespritztem, weichen Polymer als Schutz gegen Verletzungen des Zahnfleischs, besteht, optional jedoch weitere Elemente aufweisen könnte. Insbesondere weist die Schleiffläche 25 eine Körnung auf, welche in eine Matrix, beispielsweise in ein Polymer, eingebettet ist.

Der zweite Bereich 10 weist eine Dicke b und eine Höhe h auf.

Die Schleiffläche 25 ist beidseits des Grundmaterials 23 vorgesehen. Sie könnte alternativ auf nur einer Längsseite des Grundmaterials 23 vorliegen.

Der erste Bereich 8 liegt, rein exemplarisch, an den beiden Endabschnitten des Grundmaterials 23 vor, also an dessen oberer und unterer Seite. Auf diese Weise kann bereits ein Schutz des Zahnfleischs vor mechanischer Verletzung durch die Schleifvorrichtung 3 als solche erzielt werden.

Fig. 5b zeigt die Schleifvorrichtung 3, bei welcher die Endbereiche, ausgebildet als erster Bereich 8, und die Schleiffläche 25 eine glatte, übergangslose Oberfläche bilden. Die Schleiffläche 25 ist an den Stellen abtragbar, wo entsprechende Kräfte durch den Schleifvorgang auf die Schleiffläche 25 wirken.

Fig. 5c zeigt eine weitere erfindungsgemäße Schleifvorrichtung 3 in einer Seitenansicht. Die Schleifvorrichtung 3 wird mittels eines Handgriffs 27 geführt. Die Schleiffläche 25 weist eine abtragbare Beschichtung 25 zum Abschleifen des Zahnschmelzes und zur Spalterzeugung zwischen zwei benachbarten Zähnen auf. Der erste Bereich 8, der insbesondere aus einem weichen Polymer gefertigt ist, schützt das Zahnfleisch vor einer unbeabsichtigten Berührung der gekörnten Beschichtung 25.

Der zweite Bereich 10 weist die Höhe h auf.

Fig. 5d zeigt die erfindungsgemäße Schleifvorrichtung 3 aus Fig. 5c in einer Aufsicht von oben. In Fig. 5d ist die Schleifvorrichtung 3 gegenüber der Ansicht in Fig. 5c um 90 Grad gedreht.

Das Maß der vorgegebenen Dicke b umfasst die Dicke des Grundmaterials 23 sowie der Schleifflächen 25.

**Bezugszeichenliste**

| | |
|---|---|
| 1 | Handinstrument |
| 3 | Schleifvorrichtung |
| 5 | Spalt |
| 7 | Schneidezahn |
| 8 | erster Bereich |
| 9 | Zahnfleisch |
| 10 | zweiter Bereich |
| 11 | Backenzahn |
| 12 | Sollbruchstelle |
| 13 | Markierung |
| 15 | Finger |
| 19 | Löcher in der Schleifvorrichtung |
| 21 | Set mit Schleifvorrichtungen |
| 23 | Grundmaterial |
| 25 | Schleiffläche |
| 27 | Handgriff |

| | |
|---|---|
| b | Dicke, Breite des zweiten Bereichs |
| h | Höhe des zweiten Bereichs |

**Patentansprüche**

1. Medizinische Handschleifvorrichtung (3) zum zahnschmelzabtragenden Bearbeiten von Zahnoberflächen durch Einführen der Schleifvorrichtung (3) zwischen benachbarte Zähne (7, 11) eines Patienten, wobei die Schleifvorrichtung (3) wenigstens einen ersten Bereich (8) und wenigstens einen zweiten Bereich (10) mit einer vorgegebenen Dicke (29) zum Erzeugen eines Spalts zwischen den benachbarten Zähnen aufweist, **dadurch gekennzeichnet, dass** der zweite Bereich (10) eine Sollbruchstelle aufweist, an der der zweite Bereich (10) bei Überschreiten eines kritischen Biegemoments $M_{krit}$ um eine Achse senkrecht zu seiner Längsachse und senkrecht zu seiner Höhe oder Dicke bricht.

2. Schleifvorrichtung (3) nach Anspruch 1, wobei der erste Bereich (8) zum Schutz gegen Verletzungen des Zahnfleischs (9) aus einem Polymer hergestellt ist oder ein Polymer aufweist.

3. Schleifvorrichtung (3) nach Anspruch 1 oder 2, wobei die vorgegebene Dicke (29) des zweiten Bereichs (10) das Grundmaterial (23) und eine Schleiffläche (25) zum zahnschmelzabtragenden Bearbeiten der Zahnoberflächen umfasst.

4. Schleifvorrichtung (3) nach Anspruch 3, wobei die Schleiffläche (25) eine abtragbare Körnung umfasst.

5. Schleifvorrichtung (3) nach Anspruch 4, wobei die Körnung in einer Polymer-Matrixstruktur eingebettet ist.

6. Schleifvorrichtung (3) nach einem der vorangegangenen Ansprüche, wobei das Grundmaterial (23) eine optische Markierung aufweist.

7. Schleifvorrichtung (3) nach einem der vorangegangenen Ansprüche, wobei die Schleifvorrichtung (3) Abschnitte zu ihrem manuellen Führen aufweist.

8. Schleifvorrichtung (3) nach einem der vorangegangenen Ansprüche, wobei die Schleifvorrichtung (3) wenigstens einen Abschnitt zu ihrer Aufnahme in ein oder an einem Instrument (1) aufweist.

9. Schleifvorrichtung (3) nach Anspruch 1 oder 2, wobei der zweite Bereich (10) eine Lochstruktur zum Bearbeiten der Zahnoberfläche aufweist.

**10.** Schleifvorrichtung (3) nach Anspruch 9, wobei die Schleifvorrichtung (3) Abschnitte zu ihrem manuellen Führen und/oder wenigstens einen Abschnitt zu ihrer Aufnahme in ein oder an einem Instrument (1) aufweist.

**11.** Schleifvorrichtung (3) nach einem der vorangegangenen Ansprüche, wobei die Dicke des zweiten Bereichs (10) wenigstens 0,1 mm und höchstens 0,6 mm beträgt.

**12.** Set (21) mit einer Vielzahl an Schleifvorrichtungen (3) gemäß einem der vorangegangenen Ansprüche, **dadurch gekennzeichnet, dass** die Schleifvorrichtungen (3) gestufte Dicken für unterschiedliche Spaltbreiten benachbarter Zähne (7, 11) aufweisen.

**13.** Set (21) nach Anspruch 12, wobei die Schleifvorrichtungen (3) unterschiedliche Farben zur Markierung der Dicke der jeweiligen Schleifvorrichtung (3) aufweisen.

**Claims**

**1.** A medical hand grinding apparatus (3) for dental enamel abrading of tooth surfaces by introduction of the grinding apparatus (3) between adjacent teeth (7, 11) of a patient, the grinding apparatus (3) comprising at least a first area (8) and at least a second area (10) with a predetermined thickness (29) for creating a gap between adjacent teeth, **characterized in that** the second area (10) comprises a predetermined breaking point at which the second area (10) breaks along an axis perpendicular to its longitudinal axis and perpendicular to its height or thickness when a critical bending moment $M_{krit}$ is exceeded.

**2.** The grinding apparatus (3) according to claim 1, wherein the first area (8) for protection against gingiva (9) injuries is made of a polymer or comprises a polymer.

**3.** The grinding apparatus (3) according to claim 1 or 2, wherein the predetermined thickness (29) of the second area (10) includes the base material (23) and a grinding surface (25) for dental enamel abrading of tooth surfaces.

**4.** The grinding apparatus (3) according to claim 3, wherein the grinding surface (25) includes an abrasive graining.

**5.** The grinding apparatus (3) according to claim 4, wherein the abrasive graining is embedded in a polymer matrix structure.

**6.** The grinding apparatus (3) according to anyone of the preceding claims, wherein the base material (23) comprises an optical marking.

**7.** The grinding apparatus (3) according to anyone of the preceding claims, wherein the grinding apparatus (3) comprises portions for its manual guidance.

**8.** The grinding apparatus (3) according to anyone of the preceding claims, wherein the grinding apparatus (3) comprises at least one portion for receiving it in or on an instrument (1).

**9.** The grinding apparatus (3) according to claim 1 or 2, wherein the second area (10) comprises a hole structure for treating of tooth surfaces.

**10.** The grinding apparatus (3) according to claim 9, wherein the grinding apparatus (3) comprises portions for its manual guidance and/or at least one portion for receiving it in or on an instrument (1).

**11.** The grinding apparatus (3) according to anyone of the preceding claims, wherein the thickness of the second area (10) amounts at least 0.1 mm and at most 0.6 mm.

**12.** A set (21) comprising a plurality of grinding apparatuses (3) according to anyone of the preceding claims, **characterized in that** the grinding apparatuses (3) comprise stepped thicknesses for different gap widths of adjacent teeth (7,11).

**13.** The set (21) according to claim 12, wherein the grinding apparatuses (3) comprise different colours for marking the thickness of the respective grinding apparatus (3).

**EP 3 092 971 B1**

**Revendications**

1. Un appareil abrasif médical à main (3) pour le traitement abrasif de l'émail de surfaces dentaires par introduction de l'appareil abrasif (3) entre des dents adjacentes (7, 11) d'un patient, l'appareil abrasif (3) comprenant au moins une première zone (8) et au moins une seconde zone (10) d'une épaisseur prédéterminée (29) pour créer un interstice entre les dents adjacentes,
**caractérisé en ce que** la seconde zone (10) comprend un point de rupture où la seconde zone (10) se rompt selon un axe perpendiculaire à son axe longitudinal et perpendiculaire à sa hauteur ou à son épaisseur lorsqu'un nodule de flexion critique $M_{krit}$ est dépassé.

2. L'appareil abrasif (3) selon la première revendication, où la première zone (8) de protection contre les lésions gingivales (9) est constituée d'un polymère ou comprend un polymère.

3. L'appareil abrasif (3) selon la revendication 1 ou 2, où l'épaisseur prédéterminée (29) de la seconde zone (10) comprend le matériau de base (23) ainsi qu'une surface d'abrasion (25) pour le traitement abrasif de l'émail de surfaces dentaires.

4. L'appareil abrasif (3) selon la revendication 3, où la surface d'abrasion (25) comporte une granulométrie abrasive.

5. L'appareil abrasif (3) selon la revendication 4, où la granulométrie abrasive est incorporée dans une structure de matrice polymère.

6. L'appareil abrasif (3) selon l'une quelconque des revendications précédentes, où le matériau de base (23) comprend un marquage optique.

7. L'appareil abrasif (3) selon l'une quelconque des revendications précédentes, où l'appareil abrasif (3) comprend des sections pour son guidage manuel.

8. L'appareil abrasif (3) selon l'une quelconque des revendications précédentes, où l'appareil abrasif (3) comprend au moins une section destinée à l'accueillir dans ou sur un instrument (1).

9. L'appareil abrasif (3) selon la revendication 1 ou 2, où la seconde zone (10) comprend une structure perforée pour le traitement des surfaces dentaires.

10. L'appareil abrasif (3) selon la revendication 9, où l'appareil abrasif (3) comprend des sections pour son guidage manuel et/ou au moins une section pour l'accueillir dans ou sur un instrument (1).

11. L'appareil abrasif (3) selon l'une quelconque des revendications précédentes, où l'épaisseur de la seconde zone (10) est d'au moins 0,1 mm et d'au plus 0,6 mm.

12. Un set (21) comprenant une pluralité d'appareils abrasifs (3) selon l'une quelconque des revendications précédentes, **caractérisé en ce que** les appareils abrasifs (3) présentent des épaisseurs étagées pour différentes largeurs d'interstice de dents adjacentes (7,11).

13. Le set (21) selon la revendication 12, où les appareils abrasifs (3) comportent des couleurs différentes pour marquer l'épaisseur de l'appareil abrasif (3) respectif.

Fig. 1

Fig. 2

Fig. 3

Fig. 4

Fig. 5a

Fig. 5b

Fig. 5c

Fig. 5d

**IN DER BESCHREIBUNG AUFGEFÜHRTE DOKUMENTE**

**In der Beschreibung aufgeführte Patentdokumente**

- US 2014220507 A